# EUROPÄISCHE PATENTSCHRIFT

(11) **EP 2 655 560 B1**
(45) Veröffentlichungstag und Bekanntmachung des Hinweises auf die Patenterteilung: **19.04.2017**
(21) Anmeldenummer: 11811027.9
(22) Anmeldetag: 23.12.2011
(51) Int. Cl.: C10G 17/02, C11B 3/00, C11B 3/04, C11B 3/10

(54) **VERFAHREN ZUR AUFREINIGUNG VON ORGANISCHEN FLÜSSIGKEITEN MIT METHANSULFONSÄURE**
METHOD FOR PURIFYING ORGANIC LIQUIDS WITH METHANE SULPHONIC ACID
PROCÉDÉ D'ÉPURATION DE LIQUIDES ORGANIQUES AVEC DE L'ACIDE MÉTHANESULFONIQUE

(30) Priorität: 23.12.2010 DE 102010055969
(43) Veröffentlichungstag der Anmeldung: 30.10.2013
(73) Patentinhaber: BASF SE, 67056 Ludwigshafen am Rhein (DE)
(72) Erfinder: RUF, Friedrich, 84184 Tiefenbach-Ast (DE); SOHLING, Ulrich, 85356 Freising (DE); STEGE, Andrea, 85368 Moosburg (DE)
(74) Vertreter: BASF IP Association
(86) Internationale Anmeldenummer: PCT/EP2011/073960
(87) Internationale Veröffentlichungsnummer: WO 2012/085273

(56) Entgegenhaltungen:
- WO-A1-2007/098928
- WO-A1-2010/055158
- WO-A2-2004/052498
- WO-A2-2011/035085
- AU-B2- 728 062
- US-A- 1 843 851
- US-A- 3 190 829
- US-A1- 2007 210 003
- US-A1- 2009 211 946
- OYBEK ZUFAROV ET AL: "Ethanolamines used for degumming of rapeseed and sunflower oils as diesel fuels", EUROPEAN JOURNAL OF LIPID SCIENCE AND TECHNOLOGY, Bd. 111, Nr. 10, 1. Oktober 2009 (2009-10-01), Seiten 985-992, XP55015841, ISSN: 1438-7697, DOI: 10.1002/ejlt.200900025

## Beschreibung

Die vorliegende Erfindung betrifft ein Verfahren zur Aufreinigung von organischen Flüssigkeiten, die mindestens einen Fettsäureester umfasst mit Methansulfonsäure in reiner Form, als deren wässrige Lösung oder als flüssige Zusammensetzung.

Mit der Entschleimung bzw. dem Degumming von Pflanzenöl bezeichnet man die Verfahren, die Phosphor-haltige Verbindungen aus dem Pflanzenöl entfernen. Wird das Pflanzenöl als Nahrungsmittel eingesetzt, so ist es zweckmäßig, den Phosphorgehalt abzusenken, da dadurch die Haltbarkeit verbessert wird. In den letzten Jahren wird in zunehmendem Maße auch Pflanzenöl als Rohstoff für die chemische Industrie und zur Herstellung von Biodiesel eingesetzt. Dieser Trend geht einher mit den zu Ende gehenden Vorräten an Erdöl und Erdgas. Oftmals sind für den Einsatz des Pflanzenöls zur Herstellung von Biodiesel oder chemischen Rohstoffen noch schärfere Spezifikationen im Hinblick auf die Endgehalte an Phosphor, Calcium und Magnesium erforderlich. Beispielsweise beschränkt die europäische Norm den Phosphorgehalt in Biodiesel auf 4 ppm, und es ist anzunehmen, dass dieser Wert in Zukunft weiter auf bis zu 1 ppm oder auch darunter abgesenkt werden wird. Der Gehalt an Calcium und Magnesium wird von der europäischen Norm auf 5 ppm in Biodiesel beschränkt. Analog zu Pflanzenölen können auch tierische Öle und Fette durch eine Entschleimung aufgearbeitet werden.

Verfahren zur Aufreinigung von Pflanzenölen unterscheiden sich dabei von Aufreinigungsverfahren für rohe Mineralöle dahingehend, dass bei rohen Pflanzenölen insbesondere auch Phospholipide entfernt werden müssen, wobei bei Aufreinigungsverfahren von rohen Mineralölen primär die Entfernung von Schwefelverbindungen und Stickstoff-haltigen organischen Verbindungen wichtig ist. Auch können hier wesentlich höhere Temperaturen angewandt werden. Die Anforderungen an das Verfahren sind somit bei pflanzlichen Rohölen besonders hoch. Ein Verfahren zur Aufreinigung von rohen Mineralölen beschreibt beispielsweise die US 2006/0272983, wobei das rohe Mineralöl vor der Behandlung mit einem Adsorbens in einem Lösungsmittel gelöst werden muss (Naphta, Rohbenzin).

WO2004052498 beschreibt die Aufreinigung von Ölen, insbesondere von Lebensmittelölen mittels säureaktivierten Tonen. MSA wird als mögliche Säure genannt.

In einem Verfahren des Standes der Technik zur Herstellung von Biotreibstoffen wird das Pflanzenöl mit Hilfe eines heterogenen Katalysators mit Wasserstoff zu Paraffin hydriert. Ein solches Verfahren stellt beispielsweise der sog. Nex BTL-Prozess der Fa. Neste in Finnland dar. Da Phosphor-haltige Verbindungen heterogene Katalysatoren vergiften können, muss für diesen Prozess ein besonders niedriger Phosphorgehalt in den eingesetzten Fetten und Ölen eingestellt werden. Auch tierische Fette und Öle, beispielsweise aus Abfällen von Schlachtereien können als Rohstoffe für die Biodieselherstellung eingesetzt werden. Dementsprechend muss auch in diesem Falle der Phosphorgehalt so weit wie möglich auf der Stufe des Fettes oder Öles verringert werden. Dazu werden analoge Verfahren wie bei den Pflanzenölen eingesetzt. Allerdings liegt der Phosphor hier nicht nur in Form von Phospholipiden vor, sondern auch von Abbauprodukten von phosphatierten Proteinen. Diese enthalten beispielsweise Semiphosphat.

Neben den angeführten Beispielen gibt es eine Vielzahl von weiteren Prozessen, in denen Pflanzenöl oder tierische Öle oder Fette in chemischen Rohstoffen eingesetzt wird und die aufgrund der Endspezifikation oder des Einsatzes von heterogenen Katalysatoren einen besonders niedrigen Phosphorgehalt im Pflanzenöl, Fett oder tierischen Öl erfordern. Beispielsweise können Pflanzenöle selbst als Kraftstoffe eingesetzt werden. Auch für diesen Einsatz sind Grenzwerte festgesetzt, die in Europa in der DIN Norm V 51605 geregelt sind. Damit ist für diese Anwendung, abhängig vom verwendeten Öl, auch eine Reduktion des Phosphorgehaltes erforderlich.

Schließlich werden in vielen Fällen auch Mischungen von unterschiedlichen Ölen und Fetten zur Herstellung von Biodiesel verwendet, wobei sehr oft auch Abfallfette für diese Anwendung eingesetzt werden.

Da Calcium- und Magnesiumverbindungen im Biodiesel zu einer Verstopfung der Einspritzdüsen im Motor führen, sollten auch diese Verbindungen so weit wie möglich aus dem Biodiesel entfernt werden. Hierzu ist es zweckmäßig, die Entfernung der Metallionen schon auf der Ölstufe vorzunehmen, möglichst zusammen mit dem Degummingschritt.

Ein großer Teil der Phosphor-haltigen Verbindungen in Pflanzenölen sind Phospholipide, d.h. amphiphile Verbindungen von Lipiden mit Phosphor. Unter den Phospholipiden gibt es hydratisierbare Phospholipide, die sich relativ einfach durch eine Vorentschleimung mit Wasser entfernen lassen. Sie werden von Wassermolekülen umschlossen und werden damit fettunlöslich und fallen als Schleimstoffe aus, die durch z.B. Filtration oder Zentrifugation abgetrennt werden können. Ein anderer Teil der Phospholipide ist nicht oder nur schwer hydratisierbar. Diese Moleküle sind oftmals in Verbindung mit Calcium oder Magnesiumionen getreten und sind durch diese Verbindung schwer bzw. gar nicht hydratisierbar geworden. Entfernt man aus diesen Verbindungen die Calcium und Magnesiumionen, so werden diese Phospholipide wieder hydratisierbar und können mit Wasser einfach entfernt werden. Deshalb laufen Degumming und Entfernung der zweiwertigen Ionen oft parallel und Extraktionsmittel wie Säuren, die in hohem Umfang Ca²⁺ und Mg²⁺ aus dem Öl entfernen können, reduzieren auch meist gleichzeitig den P-Gehalt im Öl in großem Umfang.
Nach dem Stand der Technik sind bereits eine Vielzahl von Verfahren bekannt, mit denen durch Extraktion mit wässrigen Lösungen von Säuren und Komplexbildnern Metallionen und Phospholipide aus dem aufzureinigenden Öl entfernt werden. Hvolby [Hvolby A., JAOCS 48:503 (1971)] behandelte entschleimtes Sojaöl mit einer großen Menge EDTA-Lösung, um Calcium und Phospholipide aus dem Öl zu entfernen und eine Entschleimung zu vereinfachen (8 Teile 10 %ige EDTA-Lösung auf 1 Teil Öl). Ebenso behandelte er rohes Sojaöl mit dem gleichen Volumenverhältnis mit einer gesättigten Natriumpyrophosphatlösung und erlangte eine 90 %ige Entfernung der nicht-hydratisierbaren Phospholipide.
In der DE 10257215 B4 wird ein Verfahren vorgestellt, wie die Lagerfähigkeit von Biodiesel verbessert werden kann. Hierfür wird in einem Zwischenschritt die Rohesterphase u. a. mit einer Mischung aus einer Säure und einem Komplexbildner, wie zum Beispiel EDTA, versetzt und bei 50 °C eine Feinemulsion hergestellt. Diese Emulsion bricht nach ca. 30 Minuten und die Esterphase wird anschließend mit Wasser gewaschen. Das so gewonnene, gereinigte Biodiesel ist praktisch von allen Kondensations- und Kristallisationskeimen sowie Schleimstoffen und Eisenverbindungen befreit.

In der US 20090306419 wird ein Verfahren beschrieben, bei dem mit ultrahohen Scherkräften ein Zustrom aus pflanzlichem Rohöl mit Wasser vermischt wird. Dem Wasser kann hierbei je nach Phosphorgehalt im Öl eine komplexierende Carbonsäure wie Zitronensäure und/oder Phosphorsäure und/oder deren Salze zugesetzt werden. Anschließend wird der entstandene Schleim in einem Rückhaltetank abgetrennt und das entschleimte Öl der Bleichung und Desodorierung zugeführt.

In der SU 1731793 A1 wird beschrieben, wie mit einer 0,1 - 0,5 %igen wässrigen Lösung von Hydroxyethylendiphosphonsäure, Nitrilotrimethylphosphonsäure oder deren K-Salzen als Komplexbildner zur Entschleimung von mit Zitronensäure vorbehandelten Ölen gearbeitet wird.

In der WO 2009/068274 (EP 2008/010044) wird der Einsatz von flüssigen Adsorbenslösungen zur weiterführenden Aufreinigung von bereits vorentschleimten pflanzlichen Ölen oder Fettsäuremethylestern beschrieben. Als flüssige Adsorbentien werden hier nacheinander oder in Mischungen wässrige Lösungen von Zitronensäure, Natronlauge und Suspensionen von kolloidalem Siliciumdioxid in Wasser eingesetzt.
In der WO 9633621 A1 wird ein Vorreinigungsverfahren für pflanzliche Öle erläutert, bei denen ein Ton mit einer organischen Säure zusammen pulverisiert wird. Mit dieser Mischung wird eine Vorreinigung vorgenommen, an die eine Bleichung mit Bleicherde angeschlossen wird.

Desweiteren ist aus dem Stand der Technik ein Verfahren bekannt, bei dem kurz vor der Abtrennung der Phospholipide nach einer Behandlung mit einer schwachen organischen Säure Wasser mit einem geringen Gehalt einer wasserlöslichen polymeren Substanz zugesetzt wird. Dies würde den Anteil an nicht-hydratisierbaren Phospholipiden erheblich senken. Als polymere Substanzen sind hier anionische, kationische und nichtionische Polymere aufgeführt, wie z.B. Stärke, Milchpulver, Casein, Methylcellulose und Gummi Arabicum.
In der EP 269277 B1 wird die Entschleimung bei unter 40 °C bevorzugt. Das pflanzliche Öl wird mit einer schwachen organischen Säure, z.B. einer 50%igen Zitronensäurelösung versetzt, eine gewisse Menge Wasser zugefügt und bei unter 40 °C unter Rühren entschleimt. Die ausgefallenen Schleimstoffe werden mittels Zentrifugieren abgetrennt und das Öl einer weiteren Bleichung mit herkömmlicher Bleicherde zugeführt. Als weitere mögliche organische Säure werden Maleinsäure, Essigsäureanhydrid, Milchsäure und Oxalsäure in wässriger gesättigter Lösung genannt.

Die EP 2053118 A1 beschreibt die Entfernung von Phospholipiden aus Fetten/Ölen mittels enzymatischer Vorbehandlung und anschließendem Auswaschen mit einer wässrigen Lösung eines Komplexbildners aus der Gruppe von Ethylendiamintetraessigsäure, β-Alanindiessigsäure, Nitrilotriessigsäure, Diethylentriaminpentaessigsäure, Hydroxyethylethylendiamintriessigsäure, Iminodiacetat oder einer wässrigen Lösung einer Säure wie Zitronensäure, Milchsäure, Fumarsäure, Weinsäure oder Phosphorsäure oder beidem.
In der AU 728062 B2 wird das Öl zunächst mit einer organischen Säure aus der Gruppe Zitronensäure, Äpfelsäure, Ethylendiamintetraessigsäure, Weinsäure, Oxalsäure, Maleinsäure oder einer anorganischen Säure wie Phosphorsäure, Salzsäure oder Schwefelsäure behandelt. Nach ausreichendem Vermengen wird eine wässrige Lösung einer Carboxylsäure mit mindestens 3 Carboxylgruppen in der Säure-Form oder als Salz mit einem einwertigen Ion als Elektrolyt bzw. Komplexbildner zugegeben, hier wird bevorzugt das Natriumsalz der EDTA verwendet. Die nicht-hydratisierbaren Phospholipide werden hierdurch in eine hydratisierbare Form umgewandelt und können mit der wässrigen Phase entfernt werden. Vor Abtrennung der Ölphase kann ein Tensid (Na-Laurylsulfat) zugegeben werden. Ähnliches wird auch in der CA 2164840 beschrieben. Hier wird eine organische Säure wie Zitronensäure, Phosphorsäure, Oxalsäure, Weinsäure, Aminocarboxylsäuren, Polyhydroxycarboxylsäuren, Polycarboxylsäuren, deren Salze, deren Mischungen untereinander sowie ein Tensid vom Typ anionisch, kationisch, zwitterionisch oder nichtionisch zugesetzt oder in situ gebildet, zur Entschleimung eingesetzt. Bevorzugt wird auch hier mit Trinatriumcitrat oder dem Natriumsalz der EDTA mit Natriumlaurylsulfat als Tensid bei 60 - 90 °C gearbeitet.

Die Verwendung von Zitronensäure zur Entschleimung von pflanzlichen Ölen wird in vielen weiteren Veröffentlichungen behandelt (z.B. DE 2609705 C3, DD 284043 A5, CA 2434499 C, CA 2351338 C, GB 01510056 A, Smiles et al.), wobei die Säure in wässriger Lösung in unterschiedlichen Konzentrationen bei unterschiedlichen Temperaturen für unterschiedlich lange Zeiten mit dem Öl in Kontakt kommt. Nash et al. (1984) kombinieren Zitronensäure in hohen Konzentrationen mit Tensiden, wie Oxazolin, polymere Sulfonate oder Alkylsulfaten oder mit rohem Lecithin, was zwar zu einer Reduzierung des Phosphorgehaltes führt, jedoch der Endgehalt immer noch sehr hoch ausfällt.

In der CA 1157883 wird die Verwendung von Zitronensäure für die Entschleimung bei vorzugsweise Temperaturen zwischen 40 und 75 °C beschrieben.

Choukri et al. beschreibt in "Improved oil treatment conditions for soft degumming" (JAOCS, Vol. 78, no. 11 (2001)) den Einsatz von EDTA bei der Entschleimung von Rohöl oder mit Wasser vorentschleimtem Öl. Hierbei wird optimalerweise bei > 65 °C 5% einer wässrigen EDTA-Lösung dem Öl zugesetzt, ein Tensid (Natriumlaurylsulfat) zugegeben und für 20 min vermengt.

O. Zufarov et al. (Eur. J. Lipid Sci. Technol. 2009, 111, 0000-0000) behandelt wasserentschleimtes Rapsöl und Sonnenblumenöl unter Raumtemperatur durch Zugabe von Ethanolamin bei Raumtemperatur.

Ein weiteres Verfahren, bei dem mit einer flüssigen Phase das Öl entschleimt wird, ist in der WO 2009/068274 beschrieben. Aufgrund der zunehmenden Verwendung von Pflanzenölen zur Herstellung von Rohstoffen für die chemische Industrie und den daraus resultierenden Anforderungen an einen niedrigen Phosphor- und Mineralgehalt bzw. einen niedrigen Phosphor- und Mineralgehalt dieser Öle besteht ein ständig wachsender Bedarf nach noch effizienteren Verfahren zur Aufreinigung von Rohölen. Analoges gilt für tierische Öle und Fette sowie Mischungen aus tierischen und pflanzlichen Fetten. Die Verfahren des Standes der Technik zeigen allerdings, dass die Wirkung dieser Verfahren limitiert ist. So wird in einigen Fällen trotz vorgeschalteter Wasserentschleimung nur eine Reduktion auf mehr als 100 ppm Phosphor im Öl erreicht. Eine große Abhängigkeit besteht auch von der Art des Öles. Hierbei ist zu berücksichtigen, dass Rohöle der gleichen Art hinsichtlich des Phosphor- und Mineralgehalts stark divergieren, abhängig von der Pflanzensorte, der Wachstumsbedingungen, der Ernte- und Lagerbedingungen sowie der Art der Ölerzeugung.

Es bestand daher ein Bedarf für ein Verfahren zur Verringerung des Phosphor-, Calcium- und Magnesiumgehalts, in organischen Flüssigkeiten wie beispielsweise Fettsäureestern, insbesondere Triglycerid-haltigen Zusammensetzungen, insbesondere rohen Pflanzenölen und Biodiesel, durch das auf einfache Weise eine sehr starke Verringerung des Phosphorgehalts und gleichzeitig des Gehaltes an gelösten Metallionen, insbesondere Ca²⁺ und Mg²⁺, erzielt werden kann und das überdies im großindustriellen Maßstab eingesetzt werden kann. Im Hinblick auf einen vermehrten Einsatz von Pflanzenölen zur Herstellung von Biotreibstoffen und chemischen Rohstoffen ist es für solche Anwendungen nicht erforderlich, dass ein Entschleimungsverfahren mit Additiven arbeitet, die eine Zulassung für eine Lebensmittelbehandlung haben.
Die erfindungsgemäße Aufgabe wurde dadurch gelöst, dass Methansulfonsäure (MSA) zur Aufreinigung der organischen Flüssigkeit insbesondere von Triglycerid-haltigen Flüssigkeiten oder Fettsäureestern eingesetzt wird. Dabei wurde erstaunlicherweise gefunden, dass sich bei der Verwendung von Methansulfonsäure Phospholipide und Metallionen sehr gut aus organischen Flüssigkeiten wie Triglyceriden und anderen Fettsäureestern oder Biodiesel entfernen lassen. Die Verwendung von Methansulfonsäure zur Aufreinigung von organischen Flüssigkeiten ist im Stand der Technik nicht beschrieben.
Die vorliegende Erfindung betrifft daher in einem ersten Aspekt ein

Verfahren zur Aufreinigung von organischen Flüssigkeiten umfassend die folgenden Schritte:
a) In-Kontakt-Bringen einer organischen Flüssigkeit mit Methansulfonsäure;
b) Abtrennen der Methansulfonsäure von der organischen Flüssigkeit, wobei die organische Flüssigkeit mindestens einen Fettsäureester umfasst und wobei die Methansulfonsäure in reiner Form, als deren wässrige Lösung oder in Form einer flüssigen Zusammensetzung enthaltend Methansulfonsaeure eingesetzt wird.
Durch das erfindungsgemäße Verfahren können die Calcium- und Magnesiumgehalte von rohen Pflanzenölen und anderen Triglycerid-haltigen Zusammensetzungen nicht nur soweit verringert werden, dass sie die derzeit gemäß der EU- Norm EN 14214 geforderte Obergrenze von 5 ppm erfüllen; durch das erfindungsgemäße Verfahren können vielmehr weitaus geringere Restgehalte an Calcium und Magnesium erreichet werden, sodass auch bei einer weiteren Herabsetzung dieser Gehalte beispielsweise in Biodiesel diese Werte noch erfüllt werden können. Das erfindungsgemäße Verfahren lässt sich ebenso einsetzen, um Biodiesel aufzureinigen.

Unter dem Begriff "Calcium- und Magnesiumverbindungen" wird im Rahmen der vorliegenden Erfindung jede Verbindung verstanden, die mindestens ein Calcium- bzw. Magnesiumatom enthält.

Unter dem Begriff "Phosphor-haltige Verbindung" wird im Rahmen der vorliegenden Erfindung jede Verbindung verstanden, die mindestens ein Phosphoratom enthält, insbesondere hydratisierbare und nicht-hydratisierbare Phospholipide und Phosphoglycoside. Andere Beispiele für phosphorhaltige Verbindungen sind phosphatierte Aminosäuren, Proteine oder deren Abbauprodukte.

Der Begriff "organische Flüssigkeit" umfasst dabei alle Flüssigkeiten, die nicht mit Wasser mischbar sind, insbesondere Flüssigkeiten, die Triglyceride und/oder andere Fettsäureester enthalten. Die erfindungsgemässe organische Flüssigkeit umfasst mindestens einen Fettsäureester.

Unter dem Begriff "Fettsäureester" wird im Rahmen der vorliegenden Erfindung jede Verbindung verstanden, die durch Reaktion einer Fettsäure mit einem Alkohol hergestellt werden kann. Dabei kann es sich um jede Fettsäure handeln, die dem Fachmann als geeignet bekannt ist. Bevorzugt handelt es sich dabei um Monocarbonsäuren, also Verbindungen, die aus *einer* Carboxylgruppe (-COOH) und aus einer unterschiedlich langen, aber fast ausschließlich unverzweigten Kohlenwasserstoffkette bestehen. Bevorzugte Fettsäuren sind Buttersäure, Capronsäure, Caprylsäure, Caprinsäure, Laurinsäure, Myristinsäure, Palmitinsäure, Stearinsäure, Arachinsäure, Behensäure, Lignocerinsäure, Palmitölsäure, Ölsäure, Elaidinsäure, *cis-*Vaccensäure, Linolsäure, a-Linolensäure, g-Linolensäure, Dihomo-g-Linolensäure, Arachidonsäure, Erucasäure, Nervonsäure sowie Hydroxy- und Polyhydroxyfettsäuren. Bevorzugte Alkohole sind dabei Glyzerin und Fettalkohole, d.h. aliphatische, langkettige, einwertige, primäre Alkohole, wobei die Kohlenwasserstoffreste unverzweigt sind und 8 bis 22 Kohlenstoffatome umfassen. Fettalkohole können ein- oder mehrfach ungesättigt sein. Beispiele für bevorzugte Fettalkohole sind Laurylalkohol, Myristylalkohol, Cetylalkohol, Stearylalkohol, Behenylalkohol, Delta-9-cis-Hexadecenol, Delta-9-Octadecenol, trans-Delta-9-Octadecenol, cis-Delta-11-Octadecenol, Octadecatrienol.

Ein Beispiel für mögliche Fettsäureester ist Biodiesel.

Bevorzugt sind im Rahmen der vorliegenden Erfindung Ester von Glyzerin und Fettsäuren, sogenannte "Triglyceride".

Der Begriff "Triglycerid" umfasst dabei auch Fette. Als "Fett" werden sowohl Gemische mit fester Konsistenz, halbfester Konsistenz oder flüssiger Konsistenz bei Raumtemperatur bezeichnet. Im üblichen Sprachgebrauch werden bei Raumtemperatur flüssige Fette häufig auch als Öle bezeichnet. Ausdrücklich sei darauf hingewiesen, dass der Begriff "Fette" im Rahmen der vorliegenden Erfindung auch jegliche Öle umfasst, wie beispielsweise die Fette, die gemäß den allgemeinen Sprachgepflogenheiten nachstehend als Sojaöle, Rapsöle, etc. bezeichnet werden. Die Auswahl eines Fetts oder eines Gemisches von Fetten kann gemäß dem allgemeinen Wissen eines Fachmanns erfolgen. Fette unterschiedlicher Herkunft und Zusammensetzung sind beispielsweise in dem "Lehrbuch der Lebensmittelchemie", Berlin, 2001, 5. Auflage, ISBN 3-540-41096-1, von Belitz, Grosch, Schieberle aufgeführt. Ausdrücklich erwähnt sei, dass als Fett im Sinne der vorliegenden Erfindung jedoch auch verunreinigte oder als Abfallprodukte anfallende Fette, beispielsweise Frittieröle, tierische Fette, in Betracht kommen. Nach einer bevorzugten Ausführungsform handelt es sich bei dem Fett um ein Fett oder Öl mit einem Lecithingehalt von weniger als 10 Gew.-%, insbesondere weniger als 5 Gew.-%, weiter bevorzugt weniger als 10 ppm, insbesondere weniger als 5 ppm. Nach einer Ausführungsform sind auch entschleimte (degummed) und/oder desodorierte Fette bzw. Öle bevorzugt sowie Biodiesel(vorstufen) mit den vorstehenden Lecithingehalten. In einer weiteren bevorzugten Ausführungsform handelt es sich um Öle und/oder Fette, die durch einen hohen Gehalt an nicht-hydratisierbaren Phospholipiden als schwer entschleimbar gelten. Als Beispiel sei ein Öl aufgeführt, das nach einer Vorentschleimung mit Wasser noch einen Gehalt an Phosphor von bis zu 200 ppm aufweisen kann.

Die organische Flüssigkeit umfasst mindestens einen Fettsäureester. In einer weiteren bevorzugten Ausführungsform besteht die organische Flüssigkeit aus einem Triglycerid, d.h. aus einem pflanzlichen Öl, tierischen Öl oder Fett oder deren Mischungen.

Im Falle einer besonders bevorzugten Ausführungsform ist die organische Flüssigkeit ein pflanzliches Öl oder Fett, ausgewählt aus der Gruppe bestehend aus Sojaöl, Rapsöl, Sonnenblumenöl, Leinöl, Jatrophaöl, Canolaöl, Baumwollsaatöl, Kürbiskernöl, Kokosnussöl, Reiskeimöl, Erdnussöl, Maiskeimöl, Olivenkernöl, Jojobaöl, Mandelöl, Holzöl, Palmöl und deren Mischungen. Weitere Öle, die in dem Verfahren der vorliegenden Erfindung eingesetzt werden können sind Öle, die aus Algen gewonnen werden können.

Ebenfalls bevorzugt ist der Einsatz von organischen Flüssigkeiten, insbesondere Ölen, wie vorstehend definiert, die bereits einer Vorentschleimung unterworfen wurden (beispielsweise unter Verwendung von Zitronensäure, Phosphorsäure und/oder Wasser).

Weiterhin bevorzugt handelt es sich bei der organischen Flüssigkeit um Biodiesel. Nach der Herstellung von Biodiesel wird das rohe Biodiesel einer Wasserwäsche unterzogen, um Reste an Glycerin, Mono-, Di- und Triglyceriden zu entfernen. In diesem Schritt werden in der Regel auch restliche Metallionen, wie z. B. Na⁺, Mg²⁺, Ca²⁺ aus dem Biodiesel entfernt. Durch Zusatz von Methansulfonsäure können die Verunreinigungen, insbesondere Mg²⁺, Ca²⁺, reduziert werden. Entweder kann die Methansulfonsäure bei der Wasserwäsche zugesetzt oder das Biodiesel in einem Zusatzschritt mit Methansulfonsäure behandelt werden. Insbesondere eignet sich das erfindungsgemäße Verfahren allgemein für organische Flüssigkeiten enthaltend mindestens einen Fettsäureester, mit einem sehr hohen Calcium- und Magnesiumgehalt, einhergehend mit einem hohen Phosphorgehalt, insbesondere Pflanzenöle mit einem Calciumgehalt von mehr als 50 ppm, mehr als 100 ppm und mehr als 290 ppm, sowie einem Magnesiumgehalt von mehr als 30 ppm, mehr als 50 ppm und mehr als 100 ppm, Phosphorgehalt von mehr als 450 ppm, mehr als 550 ppm und mehr als 800 ppm. Auch bei diesen Ölen wird durch Anwendung des erfindungsgemäßen Verfahrens eine Verminderung des Phosphorgehalts erzielt.

Unter dem Begriff "In-Kontakt-Bringen" wird jegliche Art des In-Kontakt-Bringens verstanden, die dem Fachmann als für den erfindungsgemäßen Zweck geeignet bekannt ist. Bevorzugt wird die organische Flüssigkeit mit der MSA durch Rühren vermischt. In einer bevorzugten Ausführungsform wird das Gemisch für einen Zeitraum von 1 Minute bis 24 Stunden, bevorzugter 5 Minuten bis 12 Stunden, weiter bevorzugt von 15 Minuten bis 5 Stunden und am meisten bevorzugt von 30 Minuten bis 2 Stunden gerührt. Das Rühren erfolgt bevorzugt im Wasserbad, das auf eine bestimmte konstante Temperatur gehalten wird. Zu den Details der großtechnischen Durchführung eines Degumming-Prozesses sei auf "Practical Guide to Vegetable Oil Processing", Chapter 3 - Crude Oil De-Gumming and Acid Pretreatment, AOCS Press, pp 33 (2008) verwiesen.

In einer besonders bevorzugten Ausführungsform wird das In-Kontakt-Bringen gemäß Schritt a) bei einer Temperatur von 10 bis 85 °C, weiter bevorzugt von 15 bis 75 °C, insbesondere bevorzugt von 20 bis 60 °C, besonders bevorzugt von 25 bis 50 °C und am meisten bevorzugt von 35 bis 45 °C durchgeführt.

Das Abtrennen der MSA von der organischen Flüssigkeit gemäß Schritt b) kann auf jede Weise erfolgen, die dem Fachmann als für den erfindungsgemäßen Zweck geeignet bekannt ist. Bevorzugt erfolgt das Abtrennen der MSA durch Zentrifugieren bevorzugt bei 1000 bis 5000 U/min, weiter bevorzugt bei 3000 bis 4500 U/min und am meisten bevorzugt von 3500 bis 4000 U/min bevorzugt für einen Zeitraum von 1 Minute bis 30 Minuten, weiter bevorzugt von 5 Minuten bis 15 Minuten. Methansulfonsäure wird in großtechnischem Maßstab von der BASF in Ludwigshafen hergestellt und unter dem Warennamen Lutropur^{®} MSA und Lutropur^{®} MSA 100 vertrieben. Bei Lutropur^{®} MSA handelt es sich um eine 70%ige wässrige Lösung von Methansulfonsäure (Datenblätter und Produktinformation s. Anlage). Bei Lutropur^{®} MSA 100 handelt es sich um die reine, 100 %ige Methansulfonsäure. Methansulfonsäure wird nach dem Stand der Technik als Komponente für Reinigerformulierungen eingesetzt. Die Funktion der Methansulfonsäure ist hierbei die Entfernung von Kalk sowie die Entfernung von Metallsalzen in der Elektronikindustrie. Hierzu wird der entsprechende Gegenstand mit einer wässrigen Lösung von Methansulfonsäure behandelt. Weiterhin wird Methansulfonsäure als Basissäure in galvanischen Bädern eingesetzt.

Die Methansulfonsäurebehandlung kann als alleiniger Schritt zur Aufreinigung der organischen Flüssigkeit eingesetzt werden oder mit anderen Verfahren kombiniert werden, die dem Fachmann aus dem Stand der Technik zur Aufreinigung von organischen Flüssigkeiten, insbesondere organischen Flüssigkeiten, die mindestens einen Fettsäureester umfassen, bekannt sind. Die MSA kann dabei in unterschiedlichen Zubereitungsformen in den Prozess eingeführt werden. Ein mögliches Verfahren umfasst die Behandlung der organischen Flüssigkeit mit reiner MSA oder deren wässriger Lösung. Dabei ist eine 10 bis 90%ige (Gew.-%), bevorzugt 30 bis 80%ige, bevorzugter 60 bis 70 %ige wässrige Lösung besonders gut geeignet. Dieser Schritt kann dabei mit weiteren Extraktionsschritten in beliebiger Reihenfolge kombiniert werden, beispielsweise einer wässrigen Entschleimung, einer Behandlung mit einer wässrigen Zitronensäurelösung oder einer wässrigen Phosphorsäurelösung. Alternativ dazu kann auch mit wässrigen Lösungen von Komplexbildnern kombiniert werden, wie z. B. EDTA, einem Ethanolamin. Bei den Ethanolaminen ist dabei Monoethanolamin bevorzugt.

In einer besonderen Ausführungsform wird die Methansulfonsäure in Form einer flüssigen Zusammensetzung enthaltend Methansulfonsäure eingesetzt.

Unter dem Begriff "flüssige Zusammensetzung" wird jede Zusammensetzung verstanden, bei der mindestens ein Bestandteil im flüssigen Aggregatszustand vorliegt. Weitere bevorzugte Bestandteile der "flüssigen Zusammensetzung" gemäß der vorliegenden Erfindung sind Wasser, organische und/oder anorganische Säuren oder Komplexbildner, wie sie vorstehend oder nachfolgend angeführt werden oder nach dem Stand der Technik bekannt sind. Insbesondere geeignet sind Mischungen mit Zitronensäure und/oder Amidosulfonsäure. Dabei ist es besonders bevorzugt, wenn die MSA in einem Anteil von 10 bis 50 Gew.-%, besonders bevorzugt in einem Anteil von 20 bis 40 Gew.-%in der flüssigen Zusammensetzung vorliegt.

In einer weiteren bevorzugten Ausführungsform wird die Konzentration der MSA im Bereich von 0,01 bis 5,0 Gew.-%, bevorzugt 0,05 bis 4,0 Gew.-%, besonders bevorzugt 0,1 bis 2,0 Gew.-% (bezogen auf das Gewicht der organischen Flüssigkeit) gewählt.

Zusaätzlich kann MSA in Kombination mit einem Adsorbens eingesetzt werden. Bevorzugt wird die MSA in Verbindung mit einer Bleicherde eingesetzt. Insbesondere wird die MSA bei der Herstellung einer sogenannten oberflächenmodifizierten Bleicherde (SMBE = surface modified bleaching earth) eingesetzt. Hierzu wird ein geeignetes Adsorbens mit MSA beaufschlagt. Bei dem Adsorbens kann es sich um einen beliebigen anorganischen Träger handeln, bevorzugt jedoch um eine Kieselsäure, ein Kieselgel oder ein Tonmineral. Bei den Tonmineralen können als Basis für die SMBE alle Tone eingesetzt werden, die zur Herstellung einer Bleicherde anwendbar sind. Diese umfassen smektitische Tonminerale, wie z. B. Bentonite, Saponite, Montmorillonite, Vermiculite, Kerolithe, Mischungen aus Kerolith und Stevensit, Mischungen aus Kerolith und Saponit sowie Attapulgite und Sepiolite und deren Mischungen.

Das Adsorbens kann ausgewählt werden aus der Gruppe bestehend aus Alumosilikaten, Aluminiumoxiden, Aluminiumoxidhydraten, Kieselgel-basierten Zusammensetzungen, Bleicherden, Tonmineralen und deren Mischungen.

Die Konzentration des Adsorbens kann im Bereich von 0,1 bis 5,0 Gew.-%, bevorzugt 0,2 bis 4,0 Gew.-%, besonders bevorzugt 0,3 bis 3,0 Gew.-% (bezogen auf das Gewicht der organischen Flüssigkeit) gewählt werden.

Weiterhin sind als Basistone für die Herstellung der SMBE mit Methansulfonsäure auch solche bevorzugt, die aus Mischungen von Smektiten und amorpher Kieselsäure bestehen, wie sie in der WO 2006 131136 (K. Schurz, Anmelder Süd-Chemie AG) beschrieben sind. Weiterhin können bereits säureaktivierte Tone, sog. Bleicherden, mit der MSA beaufschlagt werden. Die "Beaufschlagung" kann dabei auf jegliche Art und Weise erfolgen, die dem Fachmann als für den erfindungsgemäßen Zweck geeignet bekannt ist.

Desweiteren wird im Rahmen des erfindungsgemäßen Verfahrens die MSA direkt oder als auch in Form einer flüssigen Zusammensetzung eingesetzt. Hierbei sind alle Formen, die im Rahmen dieser Anmeldung beschrieben werden, frei miteinander kombinierbar.

In einer weiteren bevorzugten Ausführungsform wird die organische Flüssigkeit vor dem In-Kontakt-Bringen mit der MSA mit einer weiteren organischen und/oder anorganischen Säure gemischt. Die organische Säure wird in einer besonders bevorzugten Ausführungsform ausgewählt aus der Gruppe bestehend aus Äpfelsäure, Weinsäure, Zitronensäure, Milchsäure, Ameisensäure, Oxalsäure, Malonsäure und deren Mischungen und die anorganische Säure wird bevorzugt aus der Gruppe bestehend aus Phosphorsäure, Schwefelsäure, Salzsäure, Amidosulfonsäure und deren Mischungen ausgewählt.

Alternativ zu den vorangegangenen Verfahren kann die MSA auch so eingesetzt werden, dass das ggf. mit Wasser vorentschleimte Öl zunächst mit MSA behandelt und dann diese Lösung direkt mit einer Bleicherde versetzt wird. Nach einer entsprechenden Reaktionszeit werden beide danach abgetrennt. Optional kann vor der Abtrennung der Bleicherde mit der MSA vorher noch eine geringe Menge Wasser, bevorzugt das 0,5 bis 10fache der Menge an eingesetzter MSA, zugesetzt werden. Dies trägt, abhängig vom Öl, den Verunreinigungen und deren Konzentration, zu einer weiteren Verbesserung der Ölaufreinigung bei. Eine weitere Alternative ist, vor der Zugabe der Bleicherde die MSA mit einer geringen Menge Wasser, z.B. 0,1 bis 2 Gew.-% bezogen auf die Menge organische Flüssigkeit, auszuwaschen, den Niederschlag abzutrennen und in die organische Phase die Bleicherde einzubringen.

Das erfindungsgemäße Verfahren zur Entfernung von Phosphor-, Calcium- und Magnesium-haltigen Verbindungen aus einem Fettsäureester oder einer Triglycerid-haltigen Zusammensetzung umfasst daher in einer weiteren bevorzugten Ausführungsform die folgenden Schritte:
a) In-Kontakt-Bringen der organischen Flüssigkeit mit Methansulfonsäure;
a1) optionale Zugabe von H₂O;
b) Abtrennen der Methansulfonsäure von der organischen Flüssigkeit.

Die optionale Zugabe von H₂O gemäß Schritt a1) kann auf jede Weise erfolgen, die dem Fachmann als für den erfindungsgemäßen Zweck geeignet bekannt ist. In einer bevorzugten Ausführungsform wird der organischen Flüssigkeit gemäß Schritt a1) H₂O in einer Menge von 0,1 bis 15 Gew.-% (bezogen auf die Menge der organischen Flüssigkeit), bevorzugt von 0,2 bis 10 Gew.-%, weiter bevorzugt von 0,5 bis 5 Gew.-% und am meisten bevorzugt von 1 bis 2 Gew.-% zugegeben. Während der Zugabe wird die organische Flüssigkeit in einer bevorzugten Ausführungsform durchgehend gerührt. In einer bevorzugten Ausführungsform verbleibt das zugegebende H₂O für einen Zeitraum von 1 Minute bis 12 Stunden, bevorzugt von 5 Minuten bis 5 Stunden, weiter bevorzugt von 10 Minuten bis 2 Stunden und am meisten bevorzugt von 20 Minuten bis 1 Stunde in der organischen Flüssigkeit. In einer besonders bevorzugten Ausführungsform wird die organische Flüssigkeit durchgängig gerührt.

Das Abtrennen der MSA von der organischen Flüssigkeit gemäß Schritt b) kann auf jede Weise erfolgen, die dem Fachmann als für den erfindungsgemäßen Zweck geeignet bekannt ist. Bevorzugt erfolgt das Abtrennen der MSA durch Zentrifugieren bevorzugt bei 1000 bis 5000 U/min, weiter bevorzugt bei 3000 bis 4500 U/min und am meisten bevorzugt von 3500 bis 4000 U/min bevorzugt für einen Zeitraum von 1 Minute bis 30 Minuten, weiter bevorzugt von 5 Minuten bis 15 Minuten.
In einer besonders bevorzugten Ausführungsform wird das In-Kontakt-Bringen gemäß Schritt a) bei einer Temperatur von 10 bis 90 °C, weiter bevorzugt von 15 bis 75 °C, insbesondere bevorzugt von 20 bis 60 °C, besonders bevorzugt von 25 bis 50 °C und am meisten bevorzugt von 35 bis 45 °C durchgeführt. In einer weiteren besonders bevorzugten Ausführungsform wird auch die Zugabe von H₂O gemäß Schritt a1) bei einer Temperatur von 10 bis 90 °C, weiter bevorzugt von 15 bis 75 °C, insbesondere bevorzugt von 20 bis 60 °C, besonders bevorzugt von 25 bis 50 °C und am meisten bevorzugt von 35 bis 45 °C durchgeführt. In einer ebenfalls bevorzugten Ausführungsform wird das Verfahren gemäß der vorliegenden Erfindung gemäß den Schritten a) bis b) bei einer Temperatur von 10 bis 90 °C, weiter bevorzugt von 15 bis 75 °C, insbesondere bevorzugt von 20 bis 60 °C, besonders bevorzugt von 25 bis 50 °C und am meisten bevorzugt von 35 bis 45 °C durchgeführt.

Die Temperierung kann auf jede Weise erfolgen, die dem Fachmann als für den erfindungsgemäßen Zweck geeignet bekannt ist. Bevorzugt erfolgt sie im Wasserbadoder auf einer Heizplatte. Ebenfalls bevorzugt ist die Zugabe von H₂O gemäß Schritt a1) das bereits auf eine Temperatur von 10 bis 90 °C, weiter bevorzugt von 15 bis 75 °C, insbesondere bevorzugt von 20 bis 60 °C, besonders bevorzugt von 25 bis 50 °C und am meisten bevorzugt von 35 bis 45 °C vorerwärmt ist. Desweiteren ist es im Rahmen der vorliegenden Erfindung möglich, dass sämtliche Schritte a) bis b) bei unterschiedlichen Temperaturen durchgeführt werden.
In einer weiteren bevorzugten Ausführungsform der vorliegenden Erfindung wird MSA in Mischung mit ein oder mehreren anderen organischen oder anorganischen Säuren eingesetzt. Dabei ist die organische Säure ausgewählt aus der Gruppe bestehend aus Äpfelsäure, Weinsäure, Zitronensäure, Milchsäure, Ameisensäure, Oxalsäure, Malonsäure und deren Mischungen. Als anorganische Säuren kommen insbesondere Salzsäure, Schwefelsäure, Phosphorsäure und Amidosulfonsäure in Frage.

In einer weiteren bevorzugten Ausführungsform des erfindungsgemäßen Verfahrens werden die Schritte a) und b) bei Atmosphärendruck oder unter Vakuum durchgeführt. Schließlich ist es möglich, dass sämtliche Schritte a) bis b) bei Atmosphärendruck oder unter Vakuum durchgeführt werden.
In einem weiteren Aspekt betrifft die vorliegende Erfindung die Verwendung von Methansulfonsäure zur Aufreinigung von organischen Flüssigkeiten.

Im Rahmen der vorliegenden Erfindung sind sämtliche Ausführungsformen, wie sie im Rahmen der vorliegenden Anmeldung beschrieben werden, frei miteinander kombinierbar. Besonders bevorzugte Ausführungsformen gemäß der vorliegenden Erfindung sind beispielsweise
A) ein Verfahren zur Aufreinigung von organischen Flüssigkeiten umfassend die folgenden Schritte:
   a) In-Kontakt-Bringen der organischen Flüssigkeit mit MSA oder einer wässrigen Lösung von MSA;
   a1) Zugabe von H₂O zu der organischen Flüssigkeit gemäß Schritt a);
   b) Abtrennen der MSA von der organischen Flüssigkeit;
   Hierbei ist Schritt a1) optional und in einer besonders bevorzugten Ausführungsform enthalten. Insbesondere bevorzugt ist desweiteren, wenn Schritt a), a1) und/oder b) bei einer Temperatur von 35 bis 80 °C durchgeführt wird, bevorzugt bei 35 bis 45 °C. Desweiteren ist bevorzugt, wenn MSA in einer Konzentration von 0,1 bis 0,5 Gew.-% (bezogen auf das Gewicht der organischen Flüssigkeit) eingesetzt wird. Desweiteren ist bevorzugt, wenn MSA als eine 50 - 70 %ige Säure verwendet wird. In einer weiteren besonders bevorzugten Ausführungsform handelt es sich bei der organischen Flüssigkeit um eine Flüssigkeit umfassend mindestens einen Fettsäureester oder eine Mischung unterschiedlicher Fettsäureester, besonders bevorzugt umfassend mindestens ein Triglyzerid oder eine Mischung unterschiedlicher Triglyzeride, oder um eine Flüssigkeit bestehend aus mindestens einem Triglyzerid und/oder mindestens einem Fettsäureester.
B) ein Verfahren zur Aufreinigung von organischen Flüssigkeiten umfassend die folgenden Schritte:
   aα) In-Kontakt-Bringen der organischen Flüssigkeit mit Wasser;
   aβ) Abtrennen der wässrigen Phase von der organischen Flüssigkeit;
   a) In-Kontakt-Bringen der organischen Flüssigkeit mit MSA;
   a1) Zugabe von H₂O zu der organischen Flüssigkeit gemäß Schritt a);
   b) Abtrennen der MSA von der organischen Flüssigkeit;
   Hierbei ist Schritt aα) und a1) jeweils optional und in einer besonders bevorzugten Ausführungsform enthalten. Insbesondere bevorzugt ist desweiteren, wenn Schritt aα), aβ), a), a1) und /oder b) bei einer Temperatur von 35 bis 80 °C durchgeführt wird, bevorzugt bei 35 bis 45 °C. Desweiteren ist bevorzugt, wenn MSA in einer Konzentration von 0,1 bis 0,5 Gew.-% eingesetzt wird. Desweiteren ist bevorzugt, wenn MSA als eine 50 - 70 %ige Säure verwendet wird. In einer weiteren besonders bevorzugten Ausführungsform handelt es sich bei der organischen Flüssigkeit um eine Flüssigkeit umfassend mindestens einen Fettsäureester oder eine Mischung unterschiedlicher Fettsäureester, besonders bevorzugt umfassend mindestens ein Triglyzerid oder eine Mischung unterschiedlicher Triglyzeride, oder um eine Flüssigkeit bestehend aus mindestens einem Triglyzerid und/oder mindestens einem Fettsäureester.
C) ein Verfahren zur Aufreinigung von organischen Flüssigkeiten umfassend die folgenden Schritte:
   aα) In-Kontakt-Bringen der organischen Flüssigkeit mit H₂O;
   aβ) Abtrennen der wässrigen Phase von der organischen Flüssigkeit;
   a) In-Kontakt-Bringen der organischen Flüssigkeit mit MSA;
   a1) Zugabe von H₂O zu der organischen Flüssigkeit gemäß Schritt a);
   a2) In-Kontakt-Bringen der organischen Flüssigkeit mit einer wässrigen Lösung einer organischen oder anorganischen Säure;
   a3) Zugabe von H₂O zu der organischen Flüssigkeit gemäß Schritt a2);
   b) Abtrennen der MSA von der organischen Flüssigkeit;
   Hierbei ist Schritt aα), aβ), a1), a2) und a3) jeweils optional und in einer besonders bevorzugten Ausführungsform enthalten. Insbesondere bevorzugt ist desweiteren, wenn Schritt aα), aβ), a), a1), a2), a3) und/oder b) bei einer Temperatur von 35 bis 80 °C durchgeführt wird, bevorzugt bei 35 bis 45 °C. Desweiteren ist bevorzugt, wenn MSA in einer Konzentration von 0,1 bis 0,5 Gew.-% eingesetzt wird. Desweiteren ist bevorzugt, wenn MSA als eine 50 - 70 %ige Säure verwendet wird. In einer weiteren besonders bevorzugten Ausführungsform handelt es sich bei der organischen Flüssigkeit um eine Flüssigkeit umfassend mindestens einen Fettsäureester oder eine Mischung unterschiedlicher Fettsäureester, besonders bevorzugt umfassend mindestens ein Triglyzerid oder eine Mischung unterschiedlicher Triglyzeride, oder um eine Flüssigkeit bestehend aus mindestens einem Triglyzerid und/oder mindestens einem Fettsäureester.
D) ein Verfahren zur Aufreinigung von organischen Flüssigkeiten umfassend die folgenden Schritte:
   aα) In-Kontakt-Bringen der organischen Flüssigkeit mit H₂O;
   aβ) Abtrennen der wässrigen Phase von der organischen Flüssigkeit;
   a) In-Kontakt-Bringen der organischen Flüssigkeit mit MSA;
   a1) Zugabe von H₂O zu der organischen Flüssigkeit gemäß Schritt a);
   a4) Abtrennen der MSA enthaltenden wässrigen Phase von der organischen Flüssigkeit;
   a5) In-Kontakt-Bringen der organischen Flüssigkeit gemäß Schritt a) mit einem Adsorbens, das mit MSA beaufschlagt ist;
   a6) Zugabe von H₂O;
   b) Abtrennen des Adsorbens von der organischen Flüssigkeit.
   Hierbei ist Schritt aα), aβ), a1), a4), a5) und a6) jeweils optional und in einer besonders bevorzugten Ausführungsform enthalten. Bei dem bevorzugten Verfahren nach D), handelt es sich bei dem festen Adsorbens um eine Kieselsäure, ein Kieselgel, ein Alumosilicat, ein Tonmineral oder eine Bleicherde. Als Bleicherden können sowohl Naturbleicherden als auch oberflächenmodifizierte Bleicherden als auch hoch aufgeschlossene Bleicherden eingesetzt werden. Insbesondere bevorzugt ist desweiteren, wenn aα), aβ), a), a1), a4), a5), a6) und/oder b) bei einer Temperatur von 35 bis 110 °C durchgeführt wird, bevorzugt bei 35 bis 80 °C. Desweiteren ist bevorzugt, wenn MSA in einer Konzentration von 0,1 bis 0,5 Gew.-% eingesetzt wird. Desweiteren ist bevorzugt, wenn MSA als eine 50 - 70 %ige Säure verwendet wird.

Bei der organischen Flüssigkeit handelt es sich um eine Flüssigkeit umfassend mindestens einen Fettsäureester oder eine Mischung unterschiedlicher Fettsäureester, besonders bevorzugt umfassend mindestens ein Triglyzerid oder eine Mischung unterschiedlicher Triglyzeride, oder um eine Flüssigkeit bestehend aus mindestens einem Triglyzerid und/oder mindestens einem Fettsäureester.

Das angeführte Verfahren ist dabei insbesondere geeignet für eine Aufreinigung von organischen Flüssigkeiten, die mit Methansulfonsäure oder deren wässrigen Lösungen mischbar sind. Bevorzugt ist dabei die Aufreinigung von Fettsäureestern, insbesondere Triglyceriden und deren Mischungen. Bei den Triglyceriden sind tierische Öle und Fette und Pflanzenöle bevorzugt. Das erfindungsgemäße Verfahren ist jedoch beispielsweise auch einsetzbar, um Metallionen aus Biodiesel zu entfernen. Auch kann es eingesetzt werden, um Fettsäureester aufzureinigen, die als Zwischenstoffe bei der Auftrennung von Fettsäuren anfallen.

### Messmethoden und Verfahren

### Vorentschleimung mit Wasser

Das Rohöl wird in einem Becherglas genau eingewogen und unter Rühren auf die gewünschte Temperatur erwärmt. Hierbei eignet sich bereits eine Temperatur von 40 °C, es kann aber auch bei höheren Temperaturen wie z.B. 80 °C gearbeitet werden. Unter Aufrechterhaltung dieser Temperatur wird, berechnet auf die Menge Rohöl, eine definierte Menge dest. Wasser, z.B. 5 oder 10 % (w/w) zugetropft. Diese Mischung wird unter weiterer Aufrechterhaltung der Temperatur für eine definierte Zeit gerührt, hierbei reichen bereits 20 min, es kann aber auch eine längere Zeitdauer wie z.B. 1 h gerührt werden. Anschließend wird der entstandene Niederschlag bei Raumtemperatur bei 4000 U/min für die Dauer von 15 min abzentrifugiert. Die untere Phase mit dem Niederschlag und dem Wasser wird verworfen. Die obere Phase wird dekantiert. Dies ist das mit Wasser vorentschleimte Öl für die nachfolgenden Untersuchungen.

### Erster Entschleimungsschritt mit Zitronensäure

Das mit Wasser vorentschleimte Öl (s. Vorentschleimung mit Wasser) wird in ein Becherglas genau eingewogen und unter Rühren auf 40 °C (z.B. im Wasserbad) oder eine andere definierte Temperatur, z.B. 80 °C (z.B. auf einer Heizplatte), erwärmt. Unter Aufrechterhaltung dieser Temperatur wird, berechnet auf die Menge eingesetzten Öles, ein definierter Anteil in % (w/w) einer 20 - 50 %igen wässrigen Zitronensäurelösung zugetropft, z.B. ist eine Dosierung von 0,2 % bis 2,0 % denkbar. Diese Mischung wird unter Aufrechterhaltung der Temperatur für eine definierte Zeit, z.B. 10 min, 20 min oder 60 min, gerührt. In der Variante A wird der entstandene Niederschlag bei Raumtemperatur bei 4000 U/min für die Dauer von 15 min abzentrifugiert und das überstehende Öl dekantiert. Dieses gewonnene Öl ist das mit Zitronensäure vorbehandelte Öl für die nachfolgenden Untersuchungen.

In der Variante B wird der Niederschlag nicht abgetrennt, sondern dieses Öl-Zitronensäuregemisch sofort für eine weitere Behandlung eingesetzt.

### Erster Entschleimungsschritt mit Methansulfonsäure als Ersatz für Zitronensäure

Die Verfahrensweise wird analog der "Behandlung mit Zitronensäure" durchgeführt, nur dass statt einer wässrigen Zitronensäurelösung eine 70 %ige bzw. 50 %ige Methansulfonsäure eingesetzt wird. Auch hier gibt es analog eine Variante A und B. Das hieraus gewonnene Öl ist das mit Methansulfonsäure vorbehandelte Öl für die nachfolgenden Untersuchungen.

### Zweiter Entschleimungsschritt mit Methansulfonsäure

20g des mit Zitronensäure vorbehandelten Öles aus dem "1. Entschleimungsschritt mit Zitronensäure" wird in ein Becherglas genau eingewogen und mit einer definierten Menge 50 %iger Methansulfonsäure versetzt. Diese Mischung wird bei 40 °C in einem temperierten Wasserbad gerührt. Bei einer Erwärmung auf eine höhere Temperatur wie z.B. 80 °C wird das Öl vor Zugabe der Methansulfonsäure auf einer Heizplatte auf die entsprechende Temperatur erwärmt und nach der Zugabe der Säure auf dieser Temperatur gehalten. Nach Ablauf von 60 min bzw. 20 min wird diese Mischung entweder einer Nachentschleimung unterzogen (s. Nachentschleimung) oder/und anschließend von dem Niederschlag und der Wasserphase durch Zentrifugieren bei 4000 U/min für die Dauer von 15 min abgetrennt. Die obere Phase ist das gereinigte Öl. Es wird dekantiert und der Metall- und P-Analytik zugeführt.

### Zweiter Entschleimungsschritt mit einem Adsorbens

20g des aus dem "1. Entschleimungsschritt mit Zitronensäure" oder aus dem "1. Entschleimungsschritt mit Methansulfonsäure" vorbehandelten Öles wird in ein Becherglas genau eingewogen und mit einer definierten Menge eines Adsorbens versetzt. Diese Mischung wird bei 40 °C in einem temperierten Wasserbad gerührt. Bei einer Erwärmung auf eine höhere Temperatur wie z.B. 80 °C wird das Öl vor Zugabe des Adsorbens auf einer Heizplatte auf die entsprechende Temperatur erwärmt und nach der Zugabe des Adsorbens auf dieser Temperatur gehalten. Nach Ablauf von 60 min bzw. 20 min wird diese Mischung entweder einer Nachentschleimung unterzogen (s. Nachentschleimung) oder/und anschließend von dem Niederschlag und der Wasserphase durch Zentrifugieren bei 4000 U/min für die Dauer von 15 min abgetrennt. Die obere Phase ist das gereinigte Öl. Es wird dekantiert und der Metall- und P-Analytik zugeführt.

### Nachentschleimung

Dem Öl oder der Ölmischung, die einer Nachentschleimung unterworfen werden soll, wird tropfenweise mit 2 % Wasser (bezogen auf die Menge eingesetztem Öl) versetzt und für 20 bzw. 30 min unter Aufrechterhaltung der vorherig eingesetzten Temperatur gerührt. Anschließend werden der entstandene Niederschlag und die Wasserphase bei Raumtemperatur und 4000 U/min für 15 min abzentrifugiert. Die obere Phase ist die gereinigte Ölphase. Sie wird dekantiert und der Metall- und P-Analytik zugeführt.

### Herstellung der verwendeten SMBEs

In einem 100 ml Becherglas werden 20,00 g dest. Wasser vorgelegt. Unter ständigem Rühren wird die Menge Naturbleicherde 1, die 10,00 g atro entspricht, portionsweise untergerührt. Dabei sollte immer darauf geachtet werden, dass keine Bleicherde am Becherglasrand hängen bleibt und sich eine gleichmäßige Suspension bildet. Falls die Suspension zu dickflüssig wird oder sich am Rand Klumpen festsetzen, muss mit zusätzlichem dest. Wasser verdünnt bzw. der Rand runtergespült werden. Die Menge des zusätzlich eingesetzten Wassers muss genau abgemessen werden, am besten indem eine genau abgewogene Menge dest. Wasser in einem Gefäß bereit gestellt wird und die Restmenge am Schluss zurück gewogen wird. In der Zwischenzeit wird die benötigte Menge an wässriger 20%iger Methansulfonsäure in einem kleinen Becherglas eingewogen. Die Menge richtet sich danach, mit wie viel % Methansulfonsäure die Naturbleicherde 1 belegt werden soll. Ist die Suspension fertig, wird die gesamte Menge an bereitgestellter 20%iger Methansulfonsäure tropfenweise der Suspension unter weiterem Rühren zugegeben. Um sicher zu stellen, dass die Methansulfonsäure vollständig eingesetzt wird, wird das Vorratsgefäß mit einer definierten Menge Wasser ausgespült und diese Flüssigkeit der Suspension zugegeben. Diese Mischung wird 15 Minuten unter Rühren gehalten und anschließend in einer flachen Tonschale bei 80 °C auf einen Endwassergehalt von ca. 21 % getrocknet. Hierbei muss die gesamte Menge an in der Suspension vorhandenem Wasser berücksichtigt werden, inklusive des vorgelegten, des zusätzlich zugesetzten Wassers, des Anteils an Wassers in der 20%igen Methansulfonsäure sowie auch der Wassergehalt in der tatsächlich eingesetzten Menge Naturbleicherde 1.

Für das Beispiel 3 wurde die Naturbleicherde 1 mit
a) SMBE I: 2 % Methansulfonsäure
b) SMBE II: 3 % Methansulfonsäure
c) SMBE III: 5 % Methansulfonsäure
belegt.

### Methoden zur Charakterisierung der eingesetzten Adsorbentien

Die physikalischen Eigenschaften der Adsorbentien wurden mit den folgenden Verfahren bestimmt:

BET-Oberfläche/Porenvolumen nach BJH und BET:
Die Oberfläche und das Porenvolumen wurden mit einem vollautomatischen Stickstoffporosimeter der Firma Micromeritics Typ ASAP 2010 bestimmt.

Die Probe wird im Hochvakuum auf die Temperatur von flüssigem Stickstoff abgekühlt. Anschließend wird kontinuierlich Stickstoff in die Probenkammern dosiert. Durch die Erfassung der adsorbierten Gasmenge als Funktion des Druckes wird bei konstanter Temperatur eine Adsorptionsisotherme ermittelt. In einem Druckausgleich wird das Analysengas schrittweise entfernt und eine Desorptionsisotherme aufgenommen.
Zur Ermittlung der spezifischen Oberfläche und der Porosität nach der BET-Theorie werden die Daten gemäß DIN 66131 ausgewertet.

Das Porenvolumen wird ferner aus den Messdaten unter Anwendung der BJH-Methode ermittelt (I.P. Barret, L.G. Joiner, P.P. Haienda, J. Am. Chem. Soc. 73, 1991, 373). Bei diesem Verfahren werden auch Effekte der Kapillarkondensation berücksichtigt. Porenvolumina bestimmter Volumengrößenbereiche werden durch Aufsummieren inkrementeller Porenvolumina bestimmt, die aus der Auswertung der Adsorptionsisotherme nach BJH erhalten werden. Das Gesamtporenvolumen nach BJH-Methode bezieht sich auf Poren mit einem Durchmesser mit 1,7 bis 300 nm.

### Wassergehalt:

Der Wassergehalt der Produkte bei 105°C wird unter Verwendung der Methode DIN/ISO-787/2 ermittelt.

### Glühverlust:

In einem geglühten gewogenen Porzellantiegel mit Deckel wird ca. 1 g getrocknete Probe auf 0,1 mg genau eingewogen und 2 h lang bei 1000 °C im Muffelofen geglüht. Danach wird der Tiegel im Exsikkator abgekühlt und ausgewogen.

### Bestimmung des Trockensiebrückstandes:

Etwa 50 g des zu untersuchenden lufttrockenen Tonmaterials werden auf einem Sieb der entsprechenden Maschenweite eingewogen. Das Sieb wird an einen Staubsauger angeschlossen, der über einen unter dem Siebboden kreisenden Saugschlitz alle Anteile, die feiner als das Sieb sind, durch das Sieb heraussaugt. Das Sieb wird mit einem Plastikdeckel abgedeckt und der Staubsauger eingeschaltet. Nach 5 Minuten wird der Staubsauger abgeschaltet und die Menge der auf dem Sieb verbliebenen, gröberen Anteile durch Differenzwägung ermittelt.

### Bestimmung des Schüttgewichts:

Ein bei der 100 ml Markierung abgeschnittener Messzylinder wird gewogen. Dann wird die zu untersuchende Probe mittels eines Pulvertrichters so in einem Zug in den Messzylinder eingefüllt, dass sich oberhalb des Abschlusses des Messzylinders ein Schüttkegel ausbildet. Der Schüttkegel wird mit Hilfe eines Lineals, das über die Öffnung des Messzylinders geführt wird, abgestreift und der gefüllte Messzylinder erneut gewogen. Die Differenz entspricht dem Schüttgewicht.

### Beschreibung der Adsorbentien und deren Eigenschaften

Für die folgenden Beispiele wurden in Kombination mit einer Methansulfonsäurebehandlung oder als Basis für eine Herstellung von oberflächenmodifizierten Bleicherden folgende Adsorbentien/Bleicherden eingesetzt:
- Kieselgel Trisyl^{®} 300 von Grace, Worms
- Alumoslicat 1, ein Alumoslicat mit 45 GeW SiO₂
- Naturbleicherde 1, die aus einer Mischung aus einer natürlichen Kieselsäure und einem Smektit besteht (wie in der WO 2006131136 (SEM 285-III) beschrieben)
- Bleicherde Tonsil^{®} 919 FF, Süd-Chemie AG, Moosburg
- Bleicherde Tonsil^{®} Supreme 112 FF, Süd-Chemie AG, Moosburg

In den folgenden Tabellen sind die chemischen Zusammensetzungen und physikalischen Eigenschaften der Adsorbentien angeführt, die in den folgenden Beispielen eingesetzt werden. Bei Trisyl^{®} 300 handelt es sich um ein kommerziell erhältliches Kieselgel der Firma Grace in Worms.

**Tabelle 1a: Chemische Zusammensetzung der Adsorbentien**

| Adsorbens | Alumosilikat 1 |
|---|---|
| Al₂O₃- + SiO₂-Gehalt (Gew.-%) | 75 |
| LOI (Gew.-%) | 25 |
| Al₂O₃ : SiO₂ (Gew.-%) | 55:45 |
| C (Gew.-%) | 0,2 |
| Fe₂O₃ (Gew.-%) | 0,02 |
| Na₂O (Gew.-%) | 0,005 |
| | Naturbleicherde 1 |
| SiO₂ (%) | 70,1 |
| Al₂O₃ (%) | 10,0 |
| Fe₂O₃ (%) | 3,0 |
| CaO (%) | 1,5 |
| MgO (%) | 4,3 |
| Na₂O (%) | 0,3 |
| K₂O (%) | 1,4 |
| Glühverlust (%) | 8,6 |

**Tabelle 1b Physikalische Eigenschaften der Adsorbentien**

| Adsorbens | Naturblei cherde 1 | Alumosilikat 1 | Trisyl^{®} 300 |
|---|---|---|---|
| Schüttgewicht(g/l) | 300 | 250-450 | 354 |
| Mittlere Teilchengröße (d50) [µm] · | n.d. | 50 | 15 |
| Trockensiebrückstand auf 45 µm (%) | 42 | n.d. | n.d. |
| Trockensiebrückstand auf 63 µm (%) | 33 | n.d. | n.d. |
| Wassergehalt (Gew.-%) | Max. 15 | 7,8 | 57 |
| BET Oberfläche (m²/g) | 208 | 506 | 669 |
| Kumulatives Porenvolumen (BJH) für Porendurchmesser 1.7 - 300 nm (cm³/g) | 0,825 | 0,985 | n.d. |
| Durchschnittlicher Porendurchmesser (BJH) (nm) | 16,4 | 79,2 | n.d. |

Fehlende Porositätsdaten werden nachgereicht.

### Beispiele und Figuren

Es wird darauf verwiesen, dass die im nachfolgenden ausgeführten Beispiele und Figuren einen rein illustrativen Charakter haben und lediglich der Verdeutlichung des erfindungsgemäßen Verfahrens dienen, die vorliegende Erfindung jedoch in keinster Weise einschränken.

### Es zeigen

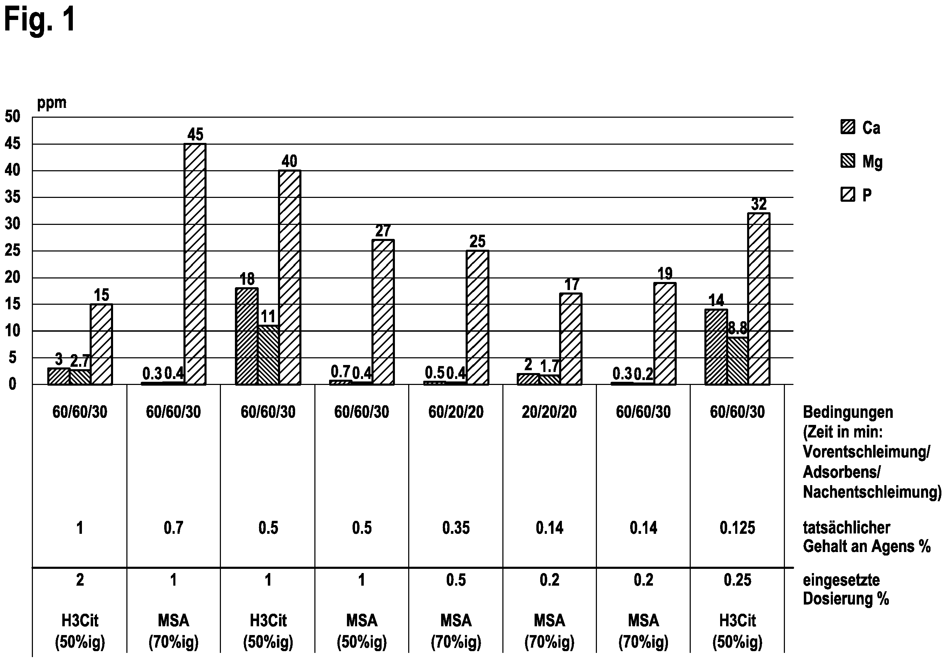

- Fig. 1:: Die Konzentrationen von Ca, Mg und P nach Durchführung des erfindungsgemäßen Verfahrens gemäß Beispiel 1 auf der Grundlage von vorentschleimtem Sojaöl (Wasser-Vorentschleimung) sowie nach Durchführung jeweils nur eines Behandlungsschrittes. Gegenüberstellung von Behandlung mit Zitronensäure zu Methansulfonsäure.

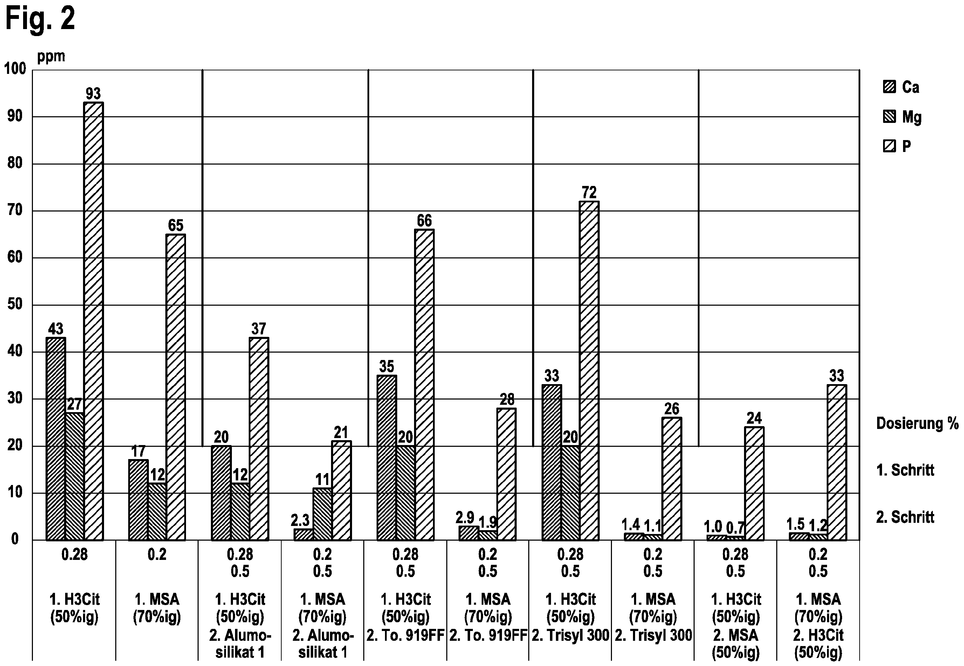

- Fig. 2:: Die Konzentrationen von Ca, Mg und P nach Durchführung des erfindungsgemäßen Verfahrens gemäß Beispiel 2a auf der Grundlage von vorentschleimtem Sojaöl (Wasser-Vorentschleimung) sowie nach Durchführung eines zweistufigen Behandlungsschrittes. Gegenüberstellung einer Dosierung von 0,14 % Zitronensäure und 0,14 % Methansulfonsäure als 1. Behandlungsschritt gefolgt von einem 2. Behandlungsschritt mit einem Adsorbens.

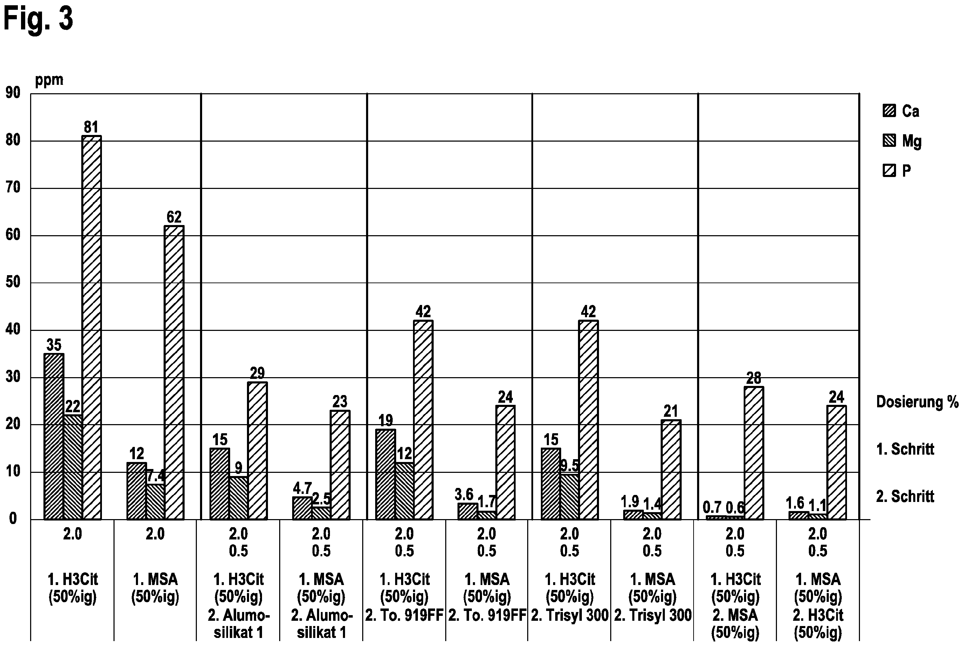

- Fig. 3:: Die Konzentrationen von Ca, Mg und P nach Durchführung des erfindungsgemäßen Verfahrens gemäß Beispiel 2b auf der Grundlage von vorentschleimtem Sojaöl (Wasser-Vorentschleimung) sowie nach Durchführung eines zweistufigen Behandlungsschrittes. Gegenüberstellung einer Dosierung von 1,0 % Zitronensäure und 1,0 % Methansulfonsäure als 1. Behandlungsschritt gefolgt von einem 2. Behandlungsschritt mit einem Adsorbens.

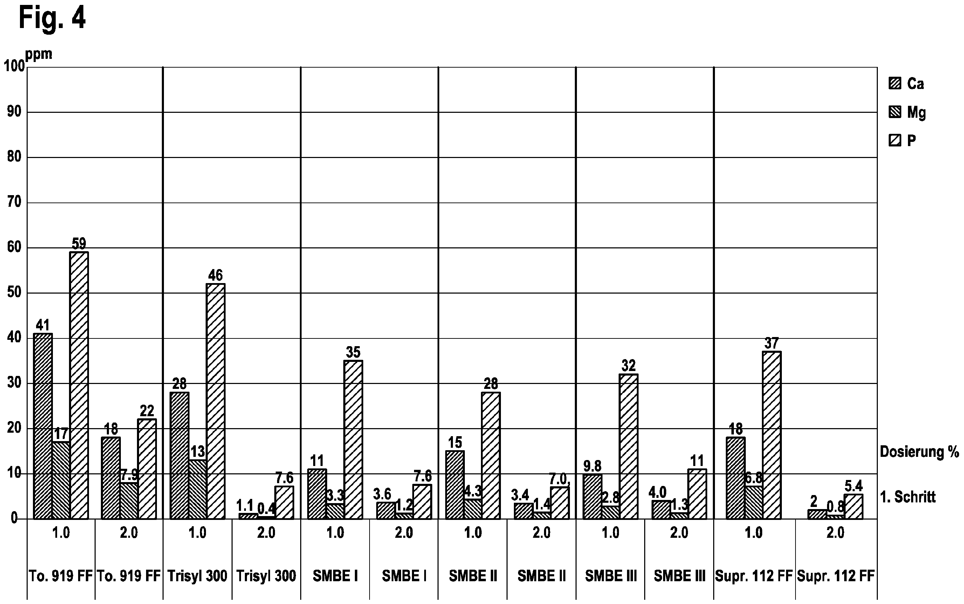

- Fig. 4:: Die Konzentrationen von Ca, Mg und P nach Durchführung des erfindungsgemäßen Verfahrens gemäß Beispiel 3 auf der Grundlage von vorentschleimtem Sojaöl (Wasser-Vorentschleimung) sowie nach Durchführung eines Entschleimungsschrittes mit Adsorbentien. Vergleich von herkömmlichen Adsorbentien mit drei mit verschiedenen Konzentrationen an Methansulfonsäure hergestellten oberflächenaktivierten Naturbleicherden (nicht erfindungsgemäss).

Ausführungsformen innerhalb der Beispiele 1 und 2, in denen nicht mit MSA in flüssiger Form behandelt wird, werden als nicht erfindungsgemäss betrachtet.

### Beispiel 1

Dieser Versuch dient einem Vergleich der Ca-, Mg- und P-Endgehalte bei der Behandlung im 1. Entschleimungsschritt mit Zitronensäure oder Methansulfonsäure sowie einer Reduzierung der Reaktionszeit von 60 auf 20 min.

Es wird ein rohes Sojaöl mit Wasser bei 40 °C und 60 bzw. 20 min vorentschleimt (s. Vorentschleimung mit Wasser). Dieses vorentschleimte Öl wird unter Aufrechterhaltung von 40 °C versetzt mit:
a) 2 % Zitronensäurelösung (50 %ig), 60 min gerührt, und für 30 min einer Nachentschleimung unterzogen.
b) 1 % Methansulfonsäure (70%ig), 60 min gerührt, Nachentschleimung für 30 min
c) 1 % Zitronensäurelösung (50%ig), 60 min gerührt, 30 min Nachentschleimung
d) 1 % Methansulfonsäure (50%ig), 60 min gerührt, 30 min Nachentschleimung
e) 0,5 % Methansulfonsäure (70%ig), 20 min gerührt, 20 min Nachentschleimung
f) 0,2 % Methansulfonsäure (70%ig), 20 min gerührt, 20 min Nachentschleimung
g) 0,2 % Methansulfonsäure (70%ig), 60 min gerührt, 30 min Nachentschleimung
h) 0,25 % Zitronensäurelösung (50%ig), 60 min gerührt, 30 min Nachentschleimung

### Ergebnisse zu Beispiel 1

**Tabelle 1**

| Beispiel | Öl vorentschleimt | 1a) | 1b) | 1c) | 1d) | 1e) | 1f) | 1g) | 1h) |
|---|---|---|---|---|---|---|---|---|---|
| % tatsächlicher Gehalt an Agens | | 1 % H₃Cit | 0,7 % MSA | 0,5 % H₃Cit | 0,5 % MSA | 0,35 % MSA | 0,14 % MSA | 0,14 % MSA | 0,125 % H₃Cit |
| ppm | | | | | | | | | |
| Ca | 48 | 3,0 | 0,3 | 18 | 07 | 05 | 2,0 | 0,3 | 14 |
| Mg | 28 | 2,7 | 0, 4 | 11 | 0,4 | 0,4 | 1,7 | 0,2 | 8,8 |
| P | 102 | 15 | 45 | 40 | 27 | 25 | 17 | 19 | 32 |

Diese Ergebnisse zeigen, dass Methansulfonsäure durchgängig wesentlich niedrigere Endgehalte an Calcium und Magnesium liefert als Zitronensäure. Des weiteren kann die Methansulfonsäure in bereits sehr niedrigen Dosagen eingesetzt werden, so zeigt bereits ein Einsatz von 0,14 % Methansulfonsäure verschwindend niedrige Endgehalte an Ca und Mg. Eine Verkürzung der Reaktionszeiten bei der Vorentschleimung, Entschleimung und Nachentschleimung erhöht diese Werte nur gering; sie bleiben noch immer unterhalb der erforderlichen 5 ppm.

Um den P-Gehalt weiter zu reduzieren, bietet sich eine weitere Behandlung des Öles an.

### Beispiel 2a

Zweistufige Entschleimung mit 1. Stufe als Behandlung mit Zitronensäure oder Methansulfonsäure und 2. Stufe als Behandlung mit festem Adsorbens oder Methansulfonsäure oder Zitronensäure.

Ein rohes Sojaöl wird mit Wasser vorentschleimt (s. Vorentschleimung). Dieses vorentschleimte Öl wird mit 0,14 %iger (w/w) Dosierung (berechnet als Reinsubstanz auf die Masse des eingesetzten Öles) an Zitronensäure bzw. Methansulfonsäure als erste Stufe behandelt (s. 1. Entschleimungsschritt mit Zitronensäure bzw. Methansulfonsäure). Das so behandelte Öl wird in einem 2. Schritt mit 0,5 % Adsorbens bzw. Zitronensäure (50%ig) oder Methansulfonsäure (50%ig) weiter behandelt (s. zweiter Entschleimungsschritt mit Adsorbens bzw. Zitronensäure bzw. Methansulfonsäure). Jeder Schritt erfolgt für 20 min bei 40 °C. Bei den Versuchen a) und b) wird eine Nachentschleimung bei 40 °C durchgeführt. Bei den Versuchen c) bis j) wird nur nach dem 2. Schritt eine Nachentschleimung bei 40 °C durchgeführt.

Es werden folgende Versuche durchgeführt:
a) 0,28 % Zitronensäure (50%ig)
b) 0,2 % Methansulfonsäure (70%ig)
c) 1. Schritt: 0,28 % Zitronensäure (50%ig) 2. Schritt: 0,5 % Alumosilikat 1
d) 1. Schritt: 0,2 % Methansulfonsäure (70%ig) 2. Schritt: 0,5 % Alumosilikat
e) 1. Schritt: 0,28 % Zitronensäure (50 %ig) 2. Schritt: 0,5 % To. 919 FF
f) 1. Schritt: 0,2 % Methansulfonsäure (70%ig) 2. Schritt: 0,5 % To. 919 FF
g) 1. Schritt: 0,28 % Zitronensäure (50 %ig) 2. Schritt: 0,5 % Trisyl 300
h) 1. Schritt: 0,2 % Methansulfonsäure (70%ig) 2. Schritt: 0,5 % Trisyl 300
i) 1. Schritt: 0,28 % Zitronensäure (50%ig) 2. Schritt: 0,5 % Methansulfonsäure (50%ig)
j) 1. Schritt: 0,2 % Methansulfonsäure (70%ig) 2. Schritt: 0,5 % Zitronensäure (50%ig)

**Ergebnisse zu Beispiel 2a**

| Beispiel | Adsorbens | Dosierung | Endgehalt ppm | | |
|---|---|---|---|---|---|
| | | % | Ca | Mg | P |
| vorentschleimt | - | - | 48 | 28 | 102 |
| 2a | 1. H3Cit (50%ig) | 0,28 | 43 | 27 | 93 |
| 2b | 1. MSA (50%ig) | 0,2 | 17 | 12 | 65 |
| 2c | 1. H3Cit (50%ig) | 0,28 | 20 | 12 | 37 |
| | 2. Alumosilikat 1 | 0,5 | | | |
| 2d | 1. MSA (70%ig) | 0,2 | 2,3 | 11 | 21 |
| | 2. Alumosilikat 1 | 0,5 | | | |
| 2e | 1. H3Cit (50%ig) | 0,28 | 35 | 20 | 66 |
| | 2. To. 919 FF | 0,5 | | | |
| 2f | 1. MSA (70%ig) | 0,2 | 2,9 | 1,9 | 28 |
| | 2. To. 919 FF' | 0,5 | | | |
| 2g | 1. H3Cit (50%ig) | 0,28 | 33 | 20 | 72 |
| | 2. Trisyl 300 | 0,5 | | | |
| 2h | 1. MSA (70%ig) | 0,2 | 1,4 | 1,1 | 26 |
| | 2. Trisyl 300 | 0,5 | | | |
| 2i | 1. H3Cit (50%ig) | 0,28 | 1,0 | 0,7 | 24 |
| | 2. MSA (50%ig) | 0,5 | | | |
| 2j | 1. MSA (70%ig) | 0,2 | 1,5 | 1,2 | 33 |
| | 2. H3Cit (50%ig) | 0,5 | | | |

Die Grafik zeigt einen Vergleich zwischen Methansulfonsäure und Zitronensäure, wenn beide einer Adsorbensbehandlung vorgeschaltet werden. Es ist deutlich zu sehen, dass Methansulfonsäure einen deutlichen Vorteil gegenüber der Zitronensäure im Endgehalt an Ca, Mg und P zeigt, wenn die Säurebehandlungen mit einer Adsorbensbehandlung kombiniert werden. Die Ca- und Mg-Werte können auf diese Weise auf so geringe Gehalte wie < 3 ppm oder sogar < 1,5 ppm gesenkt werden. Wird die Methansulfonsäure mit der Zitronensäure kombiniert, werden ebenfalls geringe Endgehalte von ≤ 1 ppm erzielt. Hierbei kann die Zitronensäure als 1. Schritt eingesetzt werden, mit einer nachgeschalteten Methansulfonsäure. Aber auch die umgekehrte Reihenfolge ist denkbar und bringt analog gute Endergebnisse.

### Beispiel 2b

Zweistufige Entschleimung mit 1. Stufe als Behandlung mit Zitronensäure oder Methansulfonsäure und 2. Stufe als Behandlung mit festem Adsorbens oder Methansulfonsäure oder Zitronensäure.

Die Durchführung verläuft analog Beispiel 2a, mit einer höheren Dosierung an Methansulfonsäure und Zitronensäure im 1. Behandlungsschritt von 1,0 % (berechnet als Reinsubstanz auf die Masse des eingesetzten Öles)

Es werden folgende Versuche durchgeführt:
a) 2,0 % Zitronensäure (50%ig)
b) 2,0 % Methansulfonsäure (50%ig)
c) 1. Schritt: 2,0 % Zitronensäure (50%ig) 2. Schritt: 0,5 % Alumosilikat 1
d) 1. Schritt: 2,0 % Methansulfonsäure (50%ig) 2. Schritt: 0,5 % Alumosilikat 1
e) 1. Schritt: 2,0 % Zitronensäure (50 %ig) 2. Schritt: 0,5 % To. 919 FF
f) 1. Schritt: 2,0 % Methansulfonsäure (50%ig) 2. Schritt: 0,5 % To. 919 FF
g) 1. Schritt: 2,0 % Zitronensäure (50 %ig) 2. Schritt: 0,5 % Trisyl 300
h) 1. Schritt: 2,0 % Methansulfonsäure (50%ig) 2. Schritt: 0,5 % Trisyl 300
i) 1. Schritt: 2,0 % Zitronensäure (50%ig) 2. Schritt: 0,5 % Methansulfonsäure (50%ig)
j) 1. Schritt: 2,0 % Methansulfonsäure (50%ig) 2. Schritt: 0,5 % Zitronensäure (50%ig)

**Ergebnisse zu Beispiel 2**

| Beispiel | Adsorbens | Dosierung | Endgehalt ppm | | |
|---|---|---|---|---|---|
| | | % | Ca | Mg | P |
| vorentschleimt | - | - | 48 | 28 | 102 |
| 2a | 1. H3Cit (50%ig) | 2,0 | 35 | 22 | 81 |
| 2b | 1. MSA (50%ig) | 2,0 | 12 | 7,4 | 62 |
| 2c | 1. H3Cit (50%ig) | 2,0 | 15 | 9,0 | 29 |
| | 2. Alumosilikat 1 | 0,5 | | | |
| 2d | 1. MSA (70%ig) | 2,0 | 4,7 | 2,5 | 23 |
| | 2. Alumosilikat 1 | 0,5 | | | |
| 2e | 1. H3Cit (50%ig) | 2,0 | 19 | 12 | 42 |
| | 2. To. 919 FF | 0,5 | | | |
| 2f | 1. MSA (70%ig) | 2,0 | 3,6 | 1,7 | 24 |
| | 2. To. 919 FF | 0,5 | | | |
| 2g | 1. H3Cit (50%ig) | 2,0 | 15 | 9,5 | 42 |
| | 2. Trisyl 300 | 0,5 | | | |
| 2h | 1. MSA (70%ig) | 2,0 | 1,9 | 1,4 | 21 |
| | 2. Trisyl 300 | 0,5 | | | |
| 2i | 1. H3Cit (50%ig) | 2,0 | 0,7 | 0,6 | 28 |
| | 2. MSA (50%ig) | 0,5 | | | |
| 2j | 1. MSA (70%ig) | 2,0 | 1,6 | 1,1 | 24 |
| | 2. H3Cit (50%ig) | 0,5 | | | |

Auch bei dieser höher eingesetzten Dosierung der Säure im 1. Behandlungsschritt ist deutlich erkennbar, dass der Einsatz von Methansulfonsäure deutlich niedrigere Endgehalte für Ca-, Mg- und P aufweist, also einen Vorteil gegenüber der üblichen Zitronensäure zeigt. Hierbei zeigen die Beispiele 2a und 2b, dass bereits ein Einsatz an Methansulfonsäure mit einer niedrigen Dosierung von 0,14 % ausreicht, um den Ca- und Mg-Gehalt auf unter 3 ppm bzw. unter 2 ppm zu bringen.

Um den verbleibenden P-Gehalt weiter zu reduzieren, bietet sich hier eine Erhöhung der Adsorbensdosierung an.

### Beispiel 3 (nicht erfindungsgemäss)

Eine Naturbleicherde 1 wird mit verschiedenen Mengen an Methansulfonsäure zu einer SMBE oberflächenaktiviert (s. Herstellung einer SMBE). Unter üblichen Bleichbedingungen für Sojaöl werden diese SMBEs mit herkömmlichen Bleicherden verglichen.

Ein rohes Sojaöl wird mit 10 % Wasser bei 80 °C für 20 min vorentschleimt (s. Vorentschleimung mit Wasser), der Niederschlag durch Zentrifugation abgetrennt (s. Vorentschleimung mit Wasser) und das so erhaltene Öl in einen Rundkolben einer Bleichapparatur eingewogen. Das Öl wird auf 80 °C erhitzt. Nach Erreichen dieser Temperatur wird es mit 0,8 % Zitronensäurelösung (20%ig) versetzt und für 20 min unter Aufrechterhaltung dieser Temperatur gerührt. Anschließend werden unter Aufrechterhaltung der Temperatur 1,0 bzw. 2,0 % Adsorbens zugegeben und für 20 min gerührt. Anschließend wird eine Nachentschleimung bei gleichbleibender Temperatur für 20 min durchgeführt (s. Nachentschleimung).

Folgende Adsorbentien werden eingesetzt:
a) 1 % To. 919 FF
b) 2 % To. 919 FF
c) 1 % Trisyl 300
d) 2 % Trisyl 300
e) 1 % SMBE aus Naturbleicherde 1 mit 2 % MSA belegt (SMBE I)
f) 2 % SMBE aus Naturbleicherde 1 mit 2 % MSA belegt (SMBE I)
g) 1 % SMBE aus Naturbleicherde 1 mit 3 % MSA belegt (SMBE II)
h) 2 % SMBE aus Naturbleicherde 1 mit 3 % MSA belegt (SMBE II)
i) 1 % SMBE aus Naturbleicherde 1 mit 5 % MSA belegt (SMBE III)
j) 2 % SMBE aus Naturbleicherde 1 mit 5 % MSA belegt (SMBE III)
k) 1 % Supr. 112 FF
l) 2 % Supr. 112 FF

| Beispiel | Adsorbens | Dosierung % | Ca [ppm] | Mg [ppm] | P [ppm] |
|---|---|---|---|---|---|
| vorentschleimt | - | - | 64 | 29 | 110 |
| 3a) | To. 919 FF | 1,0 | 41 | 17 | 59 |
| 3b) | To. 919 FF | 2,0 | 18 | 7,9 | 22 |
| 3c) | Trisyl 300 | 1,0 | 28 | 13 | 46 |
| 3d) | Trisyl 300 | 2,0 | 1,1 | 0,4 | 7,6 |
| 3e) | SMBE I | 1,0 | 11 | 3,3 | 35 |
| 3f) | SMBE I | 2,0 | 3,6 | 1,2 | 7,6 |
| 3g) | SMBE II | 1,0 | 15 | 4,3 | 28 |
| 3h) | SMBE II | 2,0 | 3,4 | 1,4 | 7,0 |
| 3i) | SMBE III | 1,0 | 9,8 | 2,8 | 32 |
| 3j) | SMBE III | 2,0 | 4,0 | 1,3 | 11 |
| 3k) | Supr. 112 FF | 1,0 | 18 | 6,8 | 37 |
| 3l) | Supr. 112 FF | 2,0 | 2 | 0,8 | 5,4 |

Dieses Beispiel zeigt, dass der Einsatz von bereits 1 % einer mit Methansulfonsäure oberflächenaktivierten Bleicherde (SMBE) Vorteile in der Reduzierung der Ca-, Mg- und P- Endgehalte zeigt, im Vergleich zu herkömmlichen Bleicherden oder mit Schwefelsäure oberflächenaktivierten Bleicherden. Eine Erhöhung der Dosierung führt zu einer weiteren Reduktion der Endgehalte an Ca, Mg und P. Hierbei erreicht die mit nur 1 % Methansulfonsäure hergestellte SMBE Werte, die nahezu vergleichbar mit Supreme 112 FF sind.

## Patentansprüche

1. Verfahren zur Aufreinigung von organischen Flüssigkeiten umfassend die folgenden Schritte:
(a) In-Kontakt-Bringen einer organischen Flüssigkeit mit Methansulfonsäure;
(b) Abtrennen der Methansulfonsäure von der organischen Flüssigkeit, wobei die organische Flüssigkeit mindestens einen Fettsäureester umfasst, und wobei die Methansulfonsäure in reiner Form, als deren wässrige Lösung oder in Form einer flüssigen Zusammensetzung enthaltend Methansulfonsaeure eingesetzt wird.

2. Verfahren gemäß Anspruch 1, wobei die organische Flüssigkeit ausgewählt wird aus der Gruppe bestehend aus Sojaöl, Rapsöl, Sonnenblumenöl, Jatrophaöl, Leinöl, Canolaöl, Baumwollsaatöl, Kürbiskernöl, Kokosnussöl, Reiskeimöl, Erdnussöl, Maiskeimöl, Olivenkernöl, Jojobaöl, Mandelöl, Palmöl, Tierfett, tierisches Öl, Holzöl, Biodiesel oder deren Mischung.

3. Verfahren gemäß einem der vorhergehenden Ansprüche, wobei die organische Flüssigkeit vor dem In-Kontakt-Bringen mit Methansulfonsäure gemäß Schritt a) mit einer weiteren organischen und/oder anorganischen Säure gemischt wird.

4. Verfahren gemäß Anspruch 3, wobei die weitere organische Säure ausgewählt wird aus der Gruppe bestehend aus Äpfelsäure, Weinsäure, Zitronensäure, Milchsäure, Ameisensäure, Oxalsäure, Malonsäure und deren Mischungen und wobei die anorganische Säure ausgewählt wird aus der Gruppe bestehend aus Phosphorsäure, Schwefelsäure, Salzsäure, Amidosulfonsäure und deren Mischungen.

5. Verfahren gemäß einem der vorhergehenden Ansprüche, wobei die Konzentration der Methansulfonsäure im Bereich von 0,01 bis 5,0 Gew.-% (bezogen auf das Gewicht der organischen Flüssigkeit) gewählt wird.

6. Verfahren nach einem der vorhergehenden Ansprüche, wobei der Schritt a) und/oder b) bei Atmosphärendruck oder unter Vakuum durchgeführt wird.

7. Verfahren nach einem der vorhergehenden Ansprüche, wobei vor und/oder nach dem In-Kontakt-Bringen der organischen Flüssigkeit mit der Methansulfonsäure der organischen Flüssigkeit Wasser zugegeben wird.

8. Verwendung von Methansulfonsäure zur Aufreinigung von organischen Flüssigkeiten, wobei die organische Flüssigkeit mindestens einen Fettsäureester umfasst, und wobei die Methansulfonsäure in reiner Form, als deren wässrige Lösung oder in Form einer flüssigen Zusammensetzung enthaltend Methansulfonsaeure eingesetzt wird.

## Claims

1. Method for purifying organic liquids comprising the following steps:
(a) bringing an organic liquid into contact with methanesulphonic acid;
(b) removing the methanesulphonic acid from the organic liquid,
wherein the organic liquid comprises at least one fatty acid ester, and wherein the methanesulphonic acid is used in pure form, as aqueous solution thereof or in the form of a liquid composition comprising methanesulphonic acid.

2. Method according to Claim 1, wherein the organic liquid is selected from the group consisting of soybean oil, rapeseed oil, sunflower oil, jatropha oil, linseed oil, canola oil, cotton seed oil, pumpkin seed oil, coconut oil, rice germ oil, peanut oil, corn oil, olive kernel oil, jojoba oil, almond oil, palm oil, animal fat, animal oil, wood oil, biodiesel or mixtures thereof.

3. Method according to either of the preceding claims, wherein the organic liquid, before the bringing into contact with methanesulphonic acid according to step a), is mixed with a further organic and/or inorganic acid.

4. Method according to Claim 3, wherein the further organic acid is selected from the group consisting of malic acid, tartaric acid, citric acid, lactic acid, formic acid, oxalic acid, malonic acid and mixtures thereof, and wherein the inorganic acid is selected from the group consisting of phosphoric acid, sulphuric acid, hydrochloric acid, amidosulphonic acid and mixtures thereof.

5. Method according to any of the preceding claims, wherein the concentration of the methanesulphonic acid is selected in the range of 0.01 to 5.0% by weight (based on the weight of the organic liquid).

6. Method according to any of the preceding claims, wherein step a) and/or b) is carried out at atmospheric pressure or under reduced pressure.

7. Method according to any of the preceding claims, wherein before and/or after bringing the organic liquid into contact with the methanesulphonic acid, water is added to the organic liquid.

8. Use of methanesulphonic acid for purifying organic liquids, wherein the organic liquid comprises at least one fatty acid ester, and wherein the methanesulphonic acid is used in pure form, as aqueous solution thereof or in the form of a liquid composition comprising methanesulphonic acid.

## Revendications

1. Procédé pour la purification de liquides organiques, comprenant les étapes suivantes :
(a) mise en contact d'un liquide organique avec de l'acide méthanesulfonique ;
(b) séparation de l'acide méthanesulfonique d'avec le liquide organique,
dans lequel le liquide organique comprend au moins un ester d'acide gras, et dans lequel on utilise l'acide méthanesulfonique sous forme pure, sous forme de sa solution aqueuse ou sous forme d'une composition liquide contenant de l'acide méthanesulfonique.

2. Procédé selon la revendication 1, dans lequel le liquide organique est choisi dans le groupe consistant en huile de soja, huile de colza, huile de tournesol, huile de jatropha, huile de lin, huile de colza canola, huile de graines de coton, huile de graines de courge, huile de coprah, huile de germes de riz, huile d'arachide, huile de germes de maïs, huile de grignons d'olive, huile de jojoba, huile d'amande, huile de palme, graisse animale, huile animale, huile de tung, biogazole ou un mélange de ceux-ci.

3. Procédé selon l'une quelconque des revendications précédentes, dans lequel avant la mise en contact avec l'acide méthanesulfonique selon l'étape a) on mélange le liquide organique avec un autre acide organique et/ou acide inorganique.

4. Procédé selon la revendication 3, dans lequel l'autre acide organique est choisi dans le groupe constitué par l'acide malique, l'acide d-tartrique, l'acide citrique, l'acide lactique, l'acide formique, l'acide oxalique, l'acide malonique et des mélanges de ceux-ci et dans lequel l'acide inorganique est choisi dans le groupe constitué par l'acide phosphorique, l'acide sulfurique, l'acide chlorhydrique, l'acide amidosulfonique et des mélanges de ceux-ci.

5. Procédé selon l'une quelconque des revendications précédentes, dans lequel la concentration de l'acide méthanesulfonique est choisie dans la plage de 0,01 à 5,0 % en poids (par rapport au poids du liquide organique).

6. Procédé selon l'une quelconque des revendications précédentes, dans lequel on effectue l'étape a) et/ou l'étape b) sous la pression atmosphérique ou sous vide.

7. Procédé selon l'une quelconque des revendications précédentes, dans lequel avant et/ou après la mise en contact du liquide organique avec l'acide méthanesulfonique on ajoute de l'eau au liquide organique.

8. Utilisation d'acide méthanesulfonique pour la purification de liquides organiques, dans laquelle le liquide organique comprend au moins un ester d'acide gras, et dans laquelle on utilise l'acide méthanesulfonique sous forme pure, sous forme de sa solution aqueuse ou sous forme d'une composition liquide contenant de l'acide méthanesulfonique.
